# EUROPEAN PATENT APPLICATION

(11) **EP 4 601 359 A1**
(43) Date of publication of application: **13.08.2025**
(21) Application number: 23874918.8
(22) Date of filing: 04.10.2023
(51) Int. Cl.: H04W 28/16, H04W 16/28, H04W 84/12, H04W 88/08, H04W 92/20

(54) **ACCESS POINT, AND METHOD FOR CONTROLLING COORDINATED COMMUNICATION**

(30) Priority: 07.10.2022 JP 2022162392
(71) Applicant: Panasonic Intellectual Property Corporation of America, Torrance, CA 90504 (US)
(72) Inventor: KANAYA, Hiroyuki, Kadoma-shi, Osaka 571-0057 (JP); URABE, Yoshio, Kadoma-shi, Osaka 571-0057 (JP); MOTOZUKA, Hiroyuki, Kadoma-shi, Osaka 571-0057 (JP)
(74) Representative: Grünecker Patent- und Rechtsanwälte PartG mbB
(86) International application number: PCT/JP2023/036276
(87) International publication number: WO 2024/075793

(57) **Abstract**

Provided is an AP device having a transmission-reception unit that receives information relating to coordinated communication, and a control circuit that determines whether to operate as a coordination AP.

## Description

### Technical Field

The present disclosure relates to an access point and a method for controlling coordinated communication.

### Background Art

The specification formulation of 802.11be (hereinafter, referred to as "11be") has been proceeded as a successor to the standard of the Institute of Electrical and Electronics Engineers (IEEE) 802.11ax (hereinafter, also referred to as "11ax"). 11ax is also referred to as High Efficiency (HE), and 11be is also referred to as Extreme High Throughput (EHT). Further, discussions are also in progress on the required specifications for a successor to the standard of 11be (sometimes referred to as Ultra High Reliability (UHR); hereinafter referred to as "beyond 11be").

### Citation List

### Non Patent Literature

NPL 1
   IEEE 802.11-18/1982r0, Consideration on multi-AP Coordination for EHT
NPL 2
   IEEE 802.11-19/0103r1, AP Coordination in EHT
NPL 3
   IEEE Std 802.11-2020, December 2020

### Summary of Invention

However, a method for controlling Multi-Access Point (AP) Coordination (hereinafter referred to as "coordinated communication"), such as a method for selecting the coordinated communication, a method for starting an operation for the coordinated communication, or an operation in a case where direct transmission and reception between APs is not possible, has not been sufficiently studied.

One non-limiting embodiment of the present disclosure facilitates providing an access point and a method for controlling coordinated communication.

An access point according to an exemplary embodiment of the present disclosure includes: a transceiver, which in operation, receives information on coordinated communication; and control circuitry, which, in operation, determines whether to operate as an access point that controls the coordinated communication.

It should be noted that general or specific embodiments may be implemented as a system, an apparatus, a method, an integrated circuit, a computer program, a storage medium, or any selective combination thereof.

According to the present invention, it is possible to provide an access point and a method for controlling coordinated communication.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an Element format;
FIG. 2 illustrates a table of Element IDs;
FIG. 3 illustrates a configuration of an STA;
FIG. 4 illustrates a configuration of an AP;
FIG. 5 illustrates the overall steps;
FIG. 6 illustrates an exemplary operation sequence for determining whether to operate as a Coordinator AP;
FIG. 7 illustrates a combination of availability information on the Coordinator AP and a Coordinated AP, and a Coordinator selection result;
FIG. 8 illustrates an exemplary format in which a coordination bitmap is transmitted with a Multi-AP element;
FIG. 8A illustrates an exemplary format for an element including Capability information on a beyond 11be terminal;
FIG. 8B illustrates an exemplary format for a Multi-AP Capabilities Information field;
FIG. 9 illustrates an exemplary Multi-AP Setup Request defined in the Multi-AP element;
FIG. 10 illustrates another exemplary operation sequence for determining whether to operate as the Coordinator AP;
FIG. 10A illustrates an exemplary format in which an operation state of a Multi-AP is transmitted;
FIG. 11 illustrates still another exemplary operation sequence for determining whether to operate as the Coordinator AP;
FIG. 12 illustrates an exemplary AP indication format defined in the Multi-AP element;
FIG. 13 illustrates an exemplary operation sequence in which AP 1 and AP 2 are activated in this order and the Coordinator AP is selected after AP 2 is activated;
FIG. 14 is a flowchart for describing an operation example using backhaul communication;
FIG. 15 illustrates other overall steps;
FIG. 16 illustrates an arrangement example of APs and STAs;
FIG. 17 illustrates an exemplary coordination start request defined in the Multi-AP element;
FIG. 18 illustrates another arrangement example of APs and an STA;
FIG. 19 illustrates still another arrangement example of APs and an STA;
FIG. 20 illustrates the coordination bitmap;
FIG. 21 illustrates a coordination bitmap provided with bits respectively indicating "availability of Coordinator AP," "availability of Coordinated AP," and "availability of each coordination scheme";
FIG. 22 illustrates a coordination bitmap provided with bits indicating the availability of each coordination scheme for "availability of Coordinator AP and "availability of Coordinated AP," respectively; and
FIG. 23 illustrates a coordination bitmap provided with bits indicating "availability of Coordinator AP" and "availability of Coordinated AP" for each coordination scheme.

### Description of Embodiments

### <Multi-AP Coordination>

In 11be and beyond 11be, the application of coordinated communication has been discussed in which access points (also referred to as a "base stations (AP STAs)"; hereinafter referred to as "APs") coordinate with each other to transmit and receive data with each terminal (also referred to as non-AP STA; hereinafter referred to as "STA").

As a configuration of the coordinated communication, a method has been studied in which an AP that controls the coordinated communication (also referred to as Coordinator AP, Primary AP, Controller AP, or Master AP; hereinafter referred to as "Coordinator AP") controls an AP that is controlled for the coordinated communication (also referred to as Coordinated AP, Secondary AP, Agent AP, or Slave AP; hereinafter referred to as "Coordinated AP") (see Non-Patent Literature (hereinafter referred to as "NPL") 1).

On the other hand, Coordinated Orthogonal Frequency Division Multiple Access (C-OFDMA), Coordinated Time Division Multiple Access (C-TDMA), Coordinated Spatial Reuse (C-SR), Coordinated Beamforming (CBF), Joint Transmissions (JT), dynamic AP selection, and the like have been proposed as methods for the coordinated communication (see NPL 2).

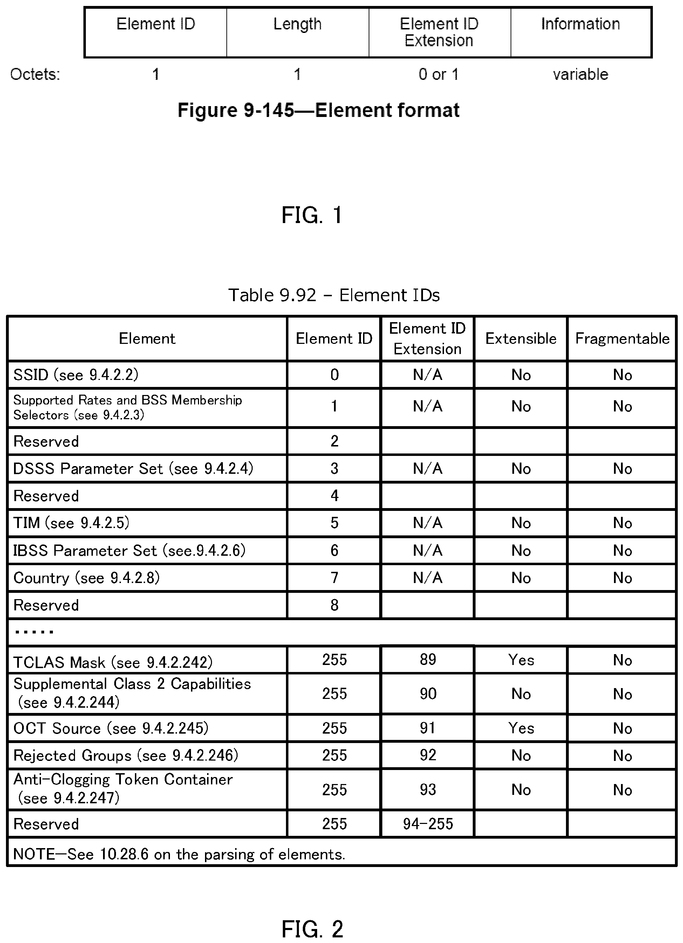

In addition, in IEEE802.11, there is an Element as information to be transmitted and received. A format of Element is illustrated in FIG. 1, and a table of Element IDs is illustrated in FIG. 2 (see NPL 3).

### <Embodiment 1>

In an embodiment of the present invention, when at least two APs are arranged, it is determined whether each AP operates as a Coordinator AP, and Multi-AP coordinated communication is thus performed.

### [Configuration of STA]

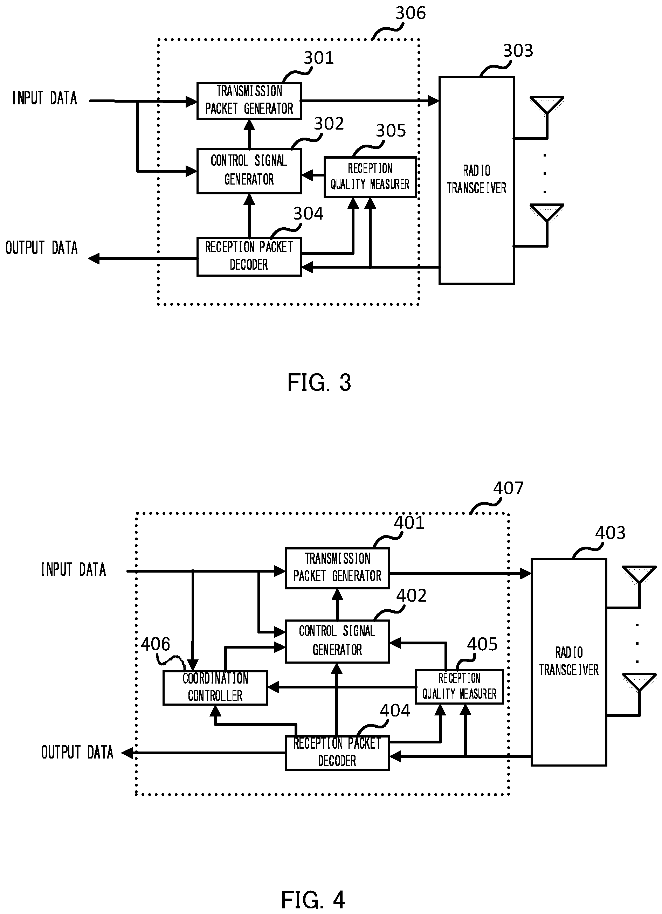

FIG. 3 illustrates a configuration of an STA. The STA includes transmission packet generator 301, control signal generator 302, radio transceiver 303, reception packet decoder 304, and reception quality measurer 305. At least one of transmission packet generator 301, control signal generator 302, reception packet decoder 304, and reception quality measurer 305 may configure control circuitry 306. A packet is sometimes referred to as a physical layer (PHY) protocol data unit (PPDU). Further, the packet and/or PPDU may be a signal obtained by encoding and modulating a medium access control (MAC) frame (MPDU: MAC protocol data unit).

Transmission packet generator 301 generates a transmission packet based on input data and a control signal generated by control signal generator 302, and outputs the transmission packet to radio transceiver 303. The input data is sometimes referred to as a medium access control (MAC) service data unit (MSDU) or higher layer data.

Control signal generator 302 generates a control signal based on the input data, control information output from reception packet decoder 304, a reception quality measured by reception quality measurer 305, and an internal state, and then outputs the control signal to transmission packet generator 301.

Radio transceiver 303 converts the transmission packet generated by transmission packet generator 301 into a radio signal and outputs the radio signal to an antenna. Further, radio transceiver 303 receives a radio signal from an antenna and outputs the received signal to reception packet decoder 304 and reception quality measurer 305.

Reception packet decoder 304 outputs output data obtained by decoding the reception signal received from radio transceiver 303, and outputs control information to reception quality measurer 305 and control signal generator 302.

Reception quality measurer 305 measures a reception quality based on the reception signal received from radio transceiver 303, the control information received from reception packet decoder 304, and the internal state.

### [Configuration of AP]

FIG. 4 illustrates a configuration of an AP. The AP includes transmission packet generator 401, control signal generator 402, radio transceiver 403, reception packet decoder 404, reception quality measurer 405, and coordination controller 406. The configuration is possible in which coordination controller 406 is added to the configuration of the STA illustrated in FIG. 3. At least one of transmission packet generator 401, control signal generator 402, reception packet decoder 404, reception quality measurer 405, and coordination controller 406 may configure control circuitry 407.

Transmission packet generator 401, control signal generator 402, radio transceiver 403, reception packet decoder 404, and reception quality measurer 405 may have the same functions as transmission packet generator 301, control signal generator 302, radio transceiver 303, reception packet decoder 304, and reception quality measurer 305.

Coordination controller 406 generates coordination control information for performing coordinated communication, based on input data, control information output by reception packet decoder 404, a reception quality measured by reception quality measurer 405, and an internal state, and then outputs the coordination control information to control signal generator 402.

### <Example 1>

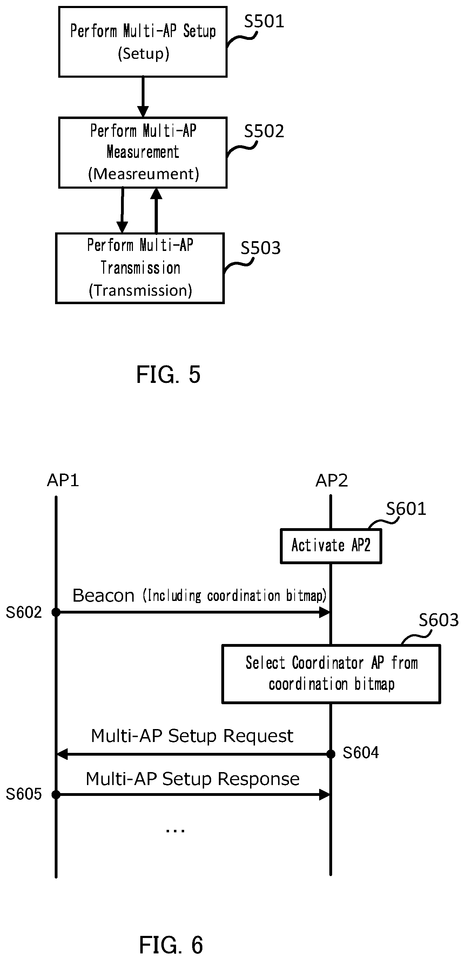

Hereinafter, an exemplary case will be described in which AP 2 is newly installed, activated, and/or restarted in a state where AP 1 is installed and periodically transmits a Beacon. FIG. 5 illustrates the overall steps. Each AP performs Multi-AP measurement S502 and Multi-AP transmission S503 after Multi-AP setup S501 as illustrated in FIG. 5.

In Multi-AP setup S501, the AP negotiates with a neighboring AP to determine whether the AP will operate as a Coordinator AP or as a Coordinated AP.

In Multi-AP measurement S502, the AP and an STA measure an interference amount and transmit the measurement results to each other. Note that the Coordinator AP may specify a measurement target. The measurement may be performed periodically or, for example, may be performed when path loss changes or the like. In a case where a coordination scheme for operation is, for example, C-TDMA or C-OFDMA, control based on the interference amount is unnecessary, and thus, Multi-AP measurement need not be performed. This makes interference measurement by the STA unnecessary, and thus, the power consumption of the STA can be reduced. Further, transmission of the interference amount measurement result is made unnecessary, and thus, a decrease in throughput can be prevented.

In Multi-AP transmission S503, a Sharing AP (that is, AP that has acquired Transmission Opportunity (TXOP)) may specify the transmission and reception of the coordinated communication. The coordinated communication may be performed only when the coordinator AP serves as the sharing AP. In a case where the Coordinated AP serves as the sharing AP, the coordinated communication may be performed by the specification (for example, trigger) of the Coordinator AP.

In Multi-AP transmission S503, an example in which an AP acquires TXOP and performs the coordinated communication has been described, but, for example, a service period for performing the coordinated communication may be configured in Multi-AP setup S501, and the coordinated communication may be performed in Multi-AP transmission S503 (for example, AP 1 and AP 2 transmit in individual service periods) based on the configured service period. Note that the configuration of the service period may be, for example, configuration of Target Wake Time (TWT) including configuration information for the coordinated communication.

Further, each AP (Coordinator AP and Coordinated AP) may perform transmission and reception with an STA that is individually associated with each AP in addition to the coordinated communication.

FIG. 6 illustrates an exemplary operation sequence for determining whether AP 2 operates as a coordinator AP through negotiation with AP 1 in Multi-AP setup S501.

AP 1 informs or indicates Capability information related to the coordinated communication. For example, a Beacon may include availability information on the Coordinator AP and the Coordinated AP (hereinafter referred to as "coordination bitmap").

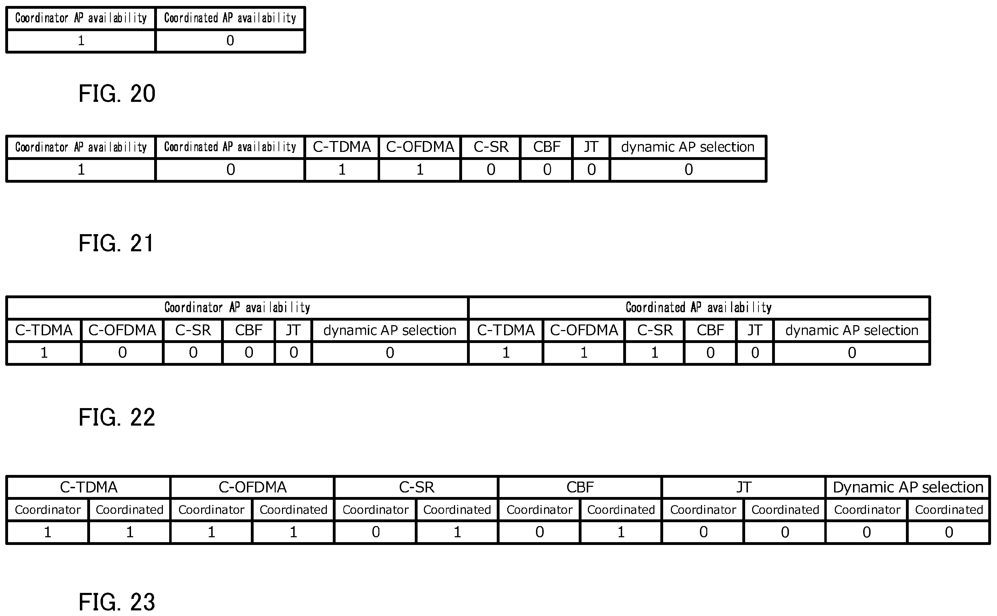

The coordination bitmap may be configured with a "bit indicating availability of the Coordinator AP" and a "bit indicating availability of the Coordinated AP" as illustrated in FIG. 20. The order of the bits may be reversed. For example, bit 1 may indicate "Yes (available)" and bit 0 may indicate "No (unavailable)," or bit 1 may indicate "No" and bit 0 may indicate "Yes."

In S601, AP 2 may perform search (also referred to as discovery or scanning) for neighboring APs at the time of activation.

In S602, AP 2 may receive a Beacon transmitted by AP 1 periodically and obtain Capability information (for example, coordination bitmap) related to the coordinated communication included in the received Beacon. AP 2 may transmit a Probe Request, receive a Probe Response transmitted by AP 1 in response to the Probe Request, and thus obtain Capability information related to the coordinated communication from the Probe Response.

In S603, AP 2 determines the Coordinator AP based on information (internal information) corresponding to the received Capability information related to the coordinated communication of AP 1 and the received Capability information related to the coordinated communication of AP 2 itself. For example, the availability of the coordinated communication and the Coordinator AP may be selected based on the internal information corresponding to the coordination bitmaps of the AP 1 and AP 2 that have been received.

In S604, when determining that the coordinated communication is possible, AP 2 may transmit a Multi-AP Setup Request to AP 1 as a request to start the coordinated communication (coordination start request). The Multi-AP Setup Request may include a result of the selection of the Coordinator AP.

In S605, AP 1 may transmit a Multi-AP Setup Response to AP 2 as a response (coordination start response) to the coordination start request. The Multi-AP Setup Response may include availability of the result of the selection of the Coordinator AP. AP 1 may transmit an acknowledge (Ack) instead of the Multi-AP Setup Response.

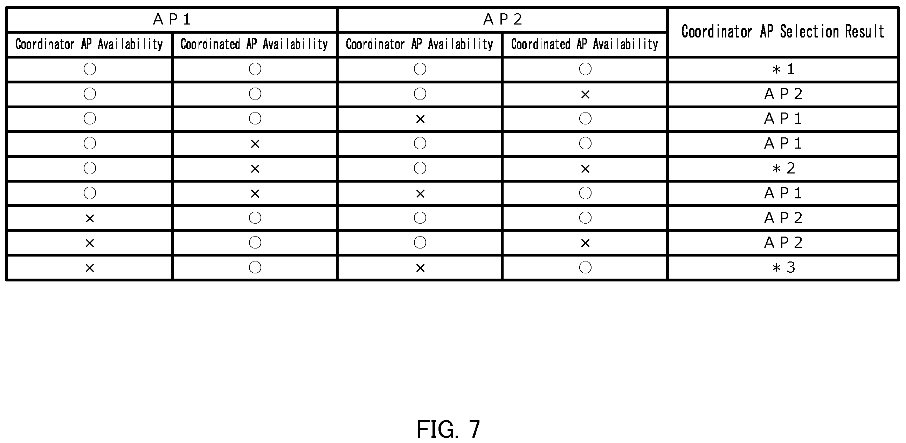

FIG. 7 illustrates an exemplary combination of availability information on the Coordinator AP, availability information on the Coordinated AP, and a result of the selection of the Coordinator AP, which is generated for each AP based on the internal information corresponding to the coordination bitmaps of AP 1 and AP 2. On the basis of the combinations illustrated in FIG. 7, the availability of the coordinated communication and the Coordinator AP may be selected. In FIG. 7, the case where both the Coordinator AP and the Coordinated AP in a coordination bitmap are unavailable is not included since it is obvious that the coordinated communication is not possible.

In FIG. 7, in the case of *1 (where both AP 1 and AP 2 can be Coordinator APs and Coordinated APs), an AP with a large number of Coordinated APs or a large number of associated STAs may be selected as the Coordinator AP. In this case, the AP may cause at least one of the number of Coordinated APs and the number of associated STAs to be included in the Multi-AP Setup Request to be transmitted, for example. In the case of *2 (where both AP 1 and AP 2 can be only Coordinator APs), it may be determined that the coordination is not possible. Alternatively, when both AP 1 and AP 2 are available, a coordination scheme (for example, C-TDMA or dynamic AP selection) that does not require one AP to be the Coordinator AP and the other AP to be the Coordinated AP may be selected, and both AP 1 and AP 2 may be the Coordinator APs, or neither the Coordinator AP nor the Coordinated AP may be selected. In the case of *3 (where both AP 1 and AP 2 can be only Coordinated APs), it may be determined that the coordination is not possible. Alternatively, when both AP 1 and AP 2 are operable, a coordination scheme is selected in which it is not necessary for one to be a Coordinator AP and the other to be a Coordinated AP, and both AP 1 and AP 2 may be the Coordinated APs, or neither the Coordinator AP nor the Coordinated AP may be selected.

In a case where the AP that transmits the coordination bitmap is a Coordinated AP that has already been registered with another Coordinator AP, the availability of the Coordinator AP in the coordination bitmap may be indicated as available, or an item of the Coordinated AP that has already been registered with the other Coordinator AP may be added to the coordination bitmap.

As described above, in Multi-AP setup S501, the AP can select the Coordinator AP based on the information corresponding to the coordination bitmap indicated by another AP and the coordination bitmap of the AP itself, thereby performing Multi-AP measurement S502 and Multi-AP transmission S503 under the control of the Coordinator AP.

The coordination bitmap may include information on a coordination scheme (for example, C-TDMA, C-OFDMA, C-SR, CBF, JT, dynamic AP selection, and the like) in which each AP is operable. The coordination bitmap may be, as illustrated in FIG. 21, a coordination bitmap provided with bits respectively indicating the availability of each coordination scheme for each AP, or may be, as illustrated in FIG. 22, a coordination bitmap provided with bits indicating the availability of each coordination scheme for "availability of Coordinator AP" and "availability of Coordinated AP," respectively, or may be, as illustrated in FIG. 23, a coordination bitmap provided with bits indicating the "availability of Coordinator AP" and "availability of Coordinated AP" for each coordination scheme. In FIGS. 21, 22, and 23, the order of the coordination schemes may be different or may be a specified order. Only some of the coordination schemes may be included, or coordination schemes other than those exemplified may be included. In this case, a coordination scheme to be used in the coordinated communication may be limited to a coordination scheme in which all APs is operable, based on the information on the coordination scheme included in the coordination bitmap. In this case, for example, an operable coordination scheme may be indicated with the Multi-AP Setup Request. Thus, it is possible to select a coordination scheme in accordance with a function of an AP to be coordinated. Further, in a situation where the coordination bitmaps illustrated in FIGS. 22 and 23 are used, in the case of *1 in FIG. 7 (both AP 1 and AP 2 can be Coordinator AP and Coordinated AP), an AP with more operable coordination schemes may be the Coordinator AP.

AP 2 may perform Basic Service Set (BSS) building (also referred to as BSS start) after Multi-AP setup S501. Performing BSS building after Multi-AP setup S501 makes it possible to specify a primary CH in accordance with the coordination scheme. For example, when operating in C-SR, CBF, or JT, AP 2 can specify the same primary CH as that of AP 1, thereby easily performing allocation to the same transmission frequency band that is necessary when the coordinated communication is performed. For example, when operating in C-OFDMA, AP 2 can specify a primary CH different from that of AP 1, thereby easily performing allocation to a different transmission frequency band that is necessary when the coordinated communication is performed.

Each AP may have the Coordinated AP list, and the Coordinator AP may add an AP that is configured as the Coordinated AP in Multi-AP setup S501 to the Coordinated AP list. Further, serving as the Coordinator AP and serving as the Coordinated AP (being included in Coordinated AP list) may also be referred to as participating in a Coordination Group (or Coordination set).

When AP 1 successfully transmits the Multi-AP Setup Response in response to the Multi-AP Setup Request transmitted by AP 2, that is, when AP 2 receives the Multi-AP Setup Response or when AP 1 receives an Ack for the Multi-AP Setup Response, the Multi-AP Setup negotiation may be assumed to be successful.

AP 2 may transmit a Multi-AP Setup Request including therein "Coordinator AP candidate or any other Multi-AP related parameter candidate," and AP 1 may transmit a response including "whether to agree to the candidate" in the Multi-AP Setup Response or a response including any of "agreement/change request/rejection (to candidate)."

When the Multi-AP Setup Response indicating the "agreement" is successfully transmitted, the Multi-AP Setup negotiation is determined to be successful, and the Coordinator AP/Coordinated AP is determined.

When the Multi-AP Setup Response indicating the "change request" is successfully transmitted, AP 2 may transmit, for example, a Multi-AP Setup Response including whether AP 2 agrees to the change of the Coordinator AP/Coordinated AP.

When the Multi-AP Setup Response indicating the "rejection" is successfully transmitted, the Multi-AP Setup negotiation is determined to have failed, and the Coordinator AP/Coordinated AP is not determined.

When the Multi-AP Setup Negotiation is successful, the Coordinator AP may add an AP which is a negotiation counterpart (that is, Coordinated AP) to the Coordinated AP list.

The Coordinator AP may allocate a Coordination Group ID (or Coordination Set ID) to the Coordination Group (or Coordination set) as an identifier for identifying the Coordination Group (or Coordination set). Note that the Coordination Group ID may be allocated after the exchange of the Multi AP Setup Request and the Multi AP Setup Response or after the negotiation through the exchange of the Request and Response. The Coordination Group ID may be an ID that is uniquely identified by a combination of the ID of the Coordinator AP and the Coordination Group ID, that is, an ID that is unique for each ID of the Coordinator AP. An AP may participate in a plurality of Coordination Groups. Further, the Coordinator AP may manage a set of a Coordination Group ID and a Coordinated AP list for one Coordination Group. The Coordination Group ID may be indicated to the Coordinated AP or may be informed to another AP using a Beacon or the like. A list that summarizes IDs (for example, BSS IDs, Mac addresses, BSS colors, and the like) of the Coordinator AP and APs included in the Coordinated AP list may be referred to as a coordinated AP list, and the coordinated AP list may be informed to another AP and an STA using a Beacon or the like.

An AP (for example, AP 3) that is not participating in a Coordination Group that has already been established (for example, Coordination Group composed of AP 1 and AP 2) may participate in the Coordination Group (for example, Coordination Group composed of AP 1 and AP 2) by transmitting a Multi-AP Setup Request to an AP (for example, AP 1) that composes the Coordination Group and performing negotiation. For example, when AP 3 recognizes that AP 1 participates in a Coordination Group of a Coordination Group ID included in a Beacon of AP 1, from the Coordination Group ID included in the Beacon, AP 3 may transmit, to AP 1, a Multi AP Setup Request including the Coordination Group ID included in the Beacon. AP 3 may participate in the Coordination Group by receiving a Multi AP Setup Response from AP 1.

An example in which the Multi-AP Setup Request is used as the coordination start request and the Multi-AP Setup Response is used as the coordination start response has been described, but AP 2 may transmit a frame that requires no Response, such as an Announcement or an Advertisement, instead of the Multi-AP Setup Request. In this case, AP 1 may return an Ack frame instead of the Multi AP Setup Response.

As above, an operation example in which AP 2 transmits a coordination start request (for example, Multi-AP Setup Request) to AP 1 has been described, but AP 2 may transmit the coordination start request (for example, Multi-AP Setup Request) by broadcasting. For example, in a case where a plurality of APs is included in a Coordination Group, the coordination start request can be transmitted to the plurality of APs included in the Coordination Group simultaneously by transmitting the coordination start request by broadcasting.

### [Format Example]

Control information (for example, coordination bitmap) related to Multi-AP may be indicated using the Element format illustrated in FIG. 1. For example, Element ID = 255 and Element ID Extension = 111 in the table of Element IDs illustrated in FIG. 2 may be used as the Multi-AP elements. The value of Element ID Extension has been described as 111 as an example, but another value indicating that an element is the Multi-AP element is possible. The Multi-AP element may be included, for example, in information on a Management frame (for example, Beacon, Probe Response, Association Request, Re Association Request, Association Response, or Re Association Response frame), a Multi-AP Setup Request frame, a Multi-AP Setup Response frame, or another Action frame newly defined in the 11be standard or a successor standard. Further, the control information related to Multi-AP may be indicated in a format other than the Element format. The Multi-AP element may be referred to by another name (for example, Multi-AP Information element).

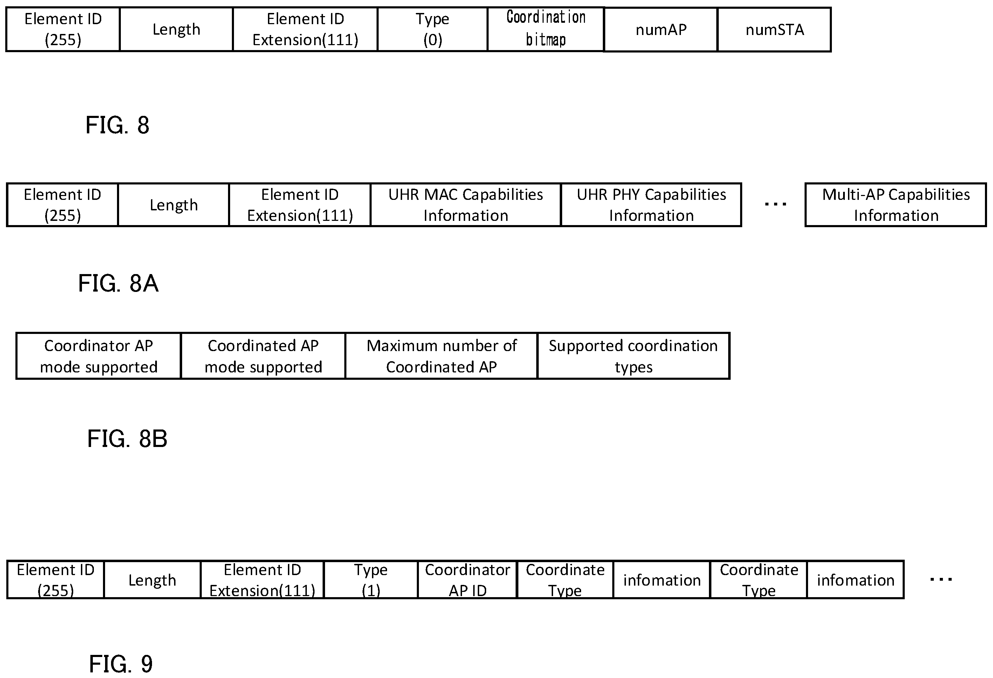

FIG. 8 illustrates an example of transmitting a coordination bitmap in a format using a Multi-AP element. In the example of the Multi-AP element illustrated in FIG. 8, the Type value used for transmitting the coordination bitmap is set to zero (Type = 0). Note that the Multi-AP Setup Request or Multi-AP Setup Response may use another Type value of the Multi-AP element. The content may be changed in accordance with a transmission method of the coordination bitmap (for example, when included in Beacon, when included in Multi-AP Setup Request, or the like). As illustrated in FIG. 8, an element including a field indicating information (for example, coordination bitmap) on operation availability as the Coordinator AP may be referred to as a Multi-AP Status variant, a Multi-AP Advertisement variant, a Multi-AP Operation variant, a Multi-AP Configuration variant, a Multi-AP Setup Information variant, and the like.

In FIG. 8, the coordination bitmap field may be the coordination bitmap illustrated in FIG. 20.

The numAP field may indicate the number of Coordinated APs in the Coordination Group including the AP.

The numSTA field may indicate the number of STAs associated with the AP or may indicate the number of STAs associated with APs in the Coordination Group. In a case where numAP and numSTA are information used in the case of *1 in FIG. 7, the information may be added to the coordination bitmap only when both the Coordinator AP and the Coordinated AP are available. The numAP or numSTA may be transmitted only when they are used by an AP that has received the information.

Instead of using the Multi-AP element in FIG. 8, the information (coordination bitmap information) on the operation availability as the Coordinator AP may be included in an element (for example, referred to as UHR Capabilities element) including capability information on a beyond 11be terminal (including APs, for example, AP 1 and AP 2).

FIG. 8A illustrates an exemplary format. The Element ID field is set to a value (255) indicating that the element includes an Element ID Extension field.

The Length field includes information on a length of the element.

The Element ID Extension field includes a value (for example, 200) indicating that the element is a UHR Capabilities element.

The UHR MAC Capabilities Information field includes information indicating whether a terminal supports optional functions of a MAC layer of the beyond 11be and includes a plurality of fields (not illustrated) corresponding to each of the optional functions.

The UHR PHY Capabilities Information field includes information on whether a terminal supports optional functions of a PHY layer of the beyond 11be and includes a plurality of fields (not illustrated) corresponding to each of the optional functions.

The Multi-AP Capabilities Information field includes information indicating whether a terminal (including AP) supports an optional function related to the Multi-AP coordination. In a case where the AP transmits the UHR Capabilities element with the Multi-AP Capabilities Information field as an optional field, the Multi-AP Capabilities Information field may be included in the UHR Capabilities element. In a case where the STA transmits the UHR Capabilities element, the Multi-AP Capabilities Information field need not be included in the UHR Capabilities element.

FIG. 8B illustrates an exemplary format of the Multi-AP Capabilities Information field.

The Coordinator AP mode supported subfield indicates whether an AP is operable as the Coordinator AP.

The Coordinated AP mode supported subfield indicates whether an AP is operable as the Coordinated AP.

A combination of the Coordinator AP mode supported and the Coordinated AP mode supported subfield may be referred to as a coordination bitmap.

The Maximum number of Coordinated AP subfield includes information on the maximum number of Coordinated APs that can participate when the AP operates as the Coordinator AP. Note that, in a case where the value of the Maximum number of Coordinated AP subfield is zero, it is defined that the operation as the Coordinator AP is not supported, and the Coordinator AP mode supported subfield may be omitted.

The Supported coordination types subfield includes information on the coordination schemes (C-TDMA, C-OFDMA, C-SR, CBF, JT, dynamic AP selection, and the like) supported by the AP.

The Multi-AP Setup Request and Multi-AP Setup Response may be defined as types of Management frame. Alternatively, for example, a Multi-AP Action frame with a Category of Multi-AP may be defined as an Action frame, and a Multi-AP Setup Request frame or a Multi-AP Setup Response frame may be defined as a subtype.

The Multi-AP Setup Request and the Multi-AP Setup Response may be defined with different Type values of the Multi-AP element, and the contents may be changed depending on the application (for example, when included in Beacon, when included in Setup Request, or the like). Further, the frames in FIGS. 8 and 8A may include some of the information on the coordination bitmap. Further, each bit of the coordination bitmap may be included in a different frame. For example, in FIG. 8 (Multi-AP element), availability information on the Coordinated AP may be omitted, including availability information on the Coordinator AP. Further, in FIG. 8A (UHR Capabilities element), the availability information on the Coordinated AP may be omitted, including the availability information on the Coordinator AP.

The Multi-AP Setup Request frame may be defined as a frame in which a Type value of the Multi-AP element is set to one (Type = 1), for example. FIG. 9 illustrates an example of a Multi-AP Setup Request in which the Type value of the Multi-AP element is specified as one.

In FIG. 9, the Coordinator AP ID indicates an ID of an AP that serves as the Coordinator AP. For example, in a situation where AP 1 is operating as the Coordinated AP with AP 3 serving as the Coordinator AP, when AP 1 is selected as the AP subject to the current Multi-AP setup operation (determination using coordination bitmap), the Coordinator AP ID may be the ID of AP 3. Information (one bit) indicating whether an AP is the Coordinator may be used instead of the Coordinator AP ID.

The Coordinate Type may indicate a coordination scheme (C-TDMA, C-OFDMA, C-SR, CBF, JT, dynamic AP selection, or the like).

The information may be control information for each coordination scheme, or may include control information on a plurality of operable coordination schemes. Information included in the information may be the following: a time-slot or a transmission start timing, and a transmission interval in the case of C-TDMA; a maximum interference power or a path loss detection threshold (maximum or minimum value) in the case of C-SR, CBF, or JT; and a switching detection power threshold and the number of forward and backward protections in the case of dynamic AP selection, for example.

The Multi-AP Setup Request may include an ID of the Multi-AP Coordination Group, or the Coordinator AP ID may be the ID of the Multi-AP Coordination Group. The Multi-AP Setup Request may include a Coordinated AP list.

An example of the Multi-AP Setup Request defined in the Multi-AP element has been described, but a field subsequent to the Coordinator AP ID may be included in the Multi-AP Setup frame as a field other than an element.

The Multi-AP Setup Response may be in the format illustrated in FIG. 9 or may be in a format including any of "whether to agree to the candidate" or "agreement/change request/rejection to the candidate." For example, in a case where AP 1 is the Coordinator AP, the format illustrated in FIG. 9 may be used, in a case where AP 1 is the Coordinated AP, the format may be selectable, e.g., a format including any of "whether to agree to the candidate" or "agreement/change request/rejection to the candidate" may be used.

The Coordinate Type included in the Multi-AP Setup Response may be a coordination scheme in which both AP 1 and AP 2 are operable.

### <Example 2>

In Example 1, an example in which the Capability information (for example, coordination bitmap) related to Multi-AP is included in the Beacon or the Probe Response in Multi-AP setup S501 has been described, but in Example 2, an example in which Capability information (for example, coordination bitmap) related to Multi-AP is included in a Multi-AP Setup Request in Multi-AP setup S501 will be described.

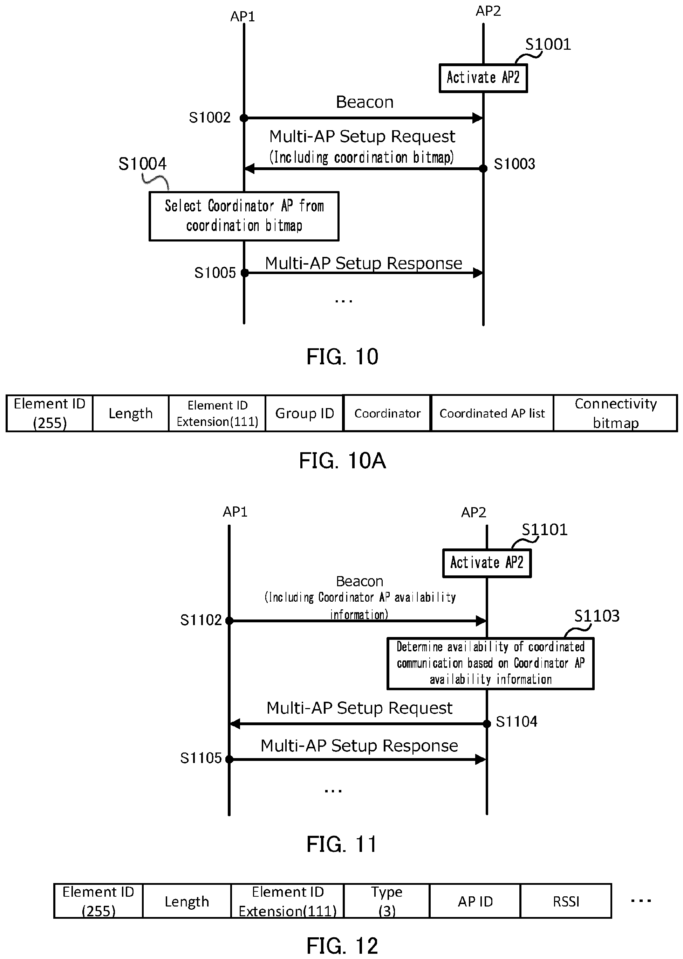

FIG. 10 illustrates another exemplary operation sequence for determining whether to operate as the Coordinator AP through negotiation between AP 1 and AP 2 in Multi-AP setup S501.

In S1001, AP 2 may search for neighboring APs at the time of activation.

In S1002, AP 2 receives a Beacon transmitted by AP 1 periodically. AP 2 may transmit a Probe Request and receive a Probe Response transmitted by AP 1 in response to the Probe Request.

In S1003, AP 2 may transmit a Multi-AP Setup Request to AP 1. At this time, AP 2 may cause a coordination bitmap to be include in the Multi-AP Setup Request to be transmitted. In this case, a Multi-AP Setup Request frame may include a Multi-AP element (for example, frame format illustrated in FIG. 8).

In S1004, AP 1 that has received the Multi-AP Setup Request selects a Coordinator AP. As in Example 1, the Coordinator AP may be selected based on the internal information corresponding to the coordination bitmap of AP 2 and the coordination bitmap of AP 1 that have been received.

In S1005, AP 1 may transmit a Multi-AP Setup Response to AP 2. AP 1 that has received the Multi-AP Setup Request may transmit the Multi-AP Setup Response to AP 2 only when an operation preparation for the coordinated communication is completed. In this case, a Multi-AP Setup Response frame may include a Multi-AP element (for example, frame format illustrated in FIG. 9).

For example, a coordinated communication operation availability flag indicating whether the coordinated communication operation is available may be added to the Beacon or Probe Response transmitted by AP 1. In this case, AP 2 can prevent transmission of an invalid Multi-AP Setup Request by transmitting the Multi-AP Setup Request only when the coordinated communication operation availability flag of AP 1 indicates available.

Further, in FIG. 10, AP 1 may transmit information indicating an operation state of Multi-AP by causing the information to be included in the Beacon or the Probe Response.

FIG. 10A illustrates an exemplary format of the information indicating the operation state of Multi-AP (Multi-AP Operation element).

The Group ID field includes an ID of a group of Multi-APs (referred to as Multi-AP Group, Coordination Group, or the like). In a case where AP 1 has not performed Multi-AP setup with another AP or has ended the Multi-AP operation, a value of the Group ID field may be set to a specific value (such as 0 or 255) that is not used as an ID, and AP 1 may indicate that the Multi-AP operation has not been started to the other AP. Further, a field indicating whether the Multi-AP operation is in progress (not illustrated) may be included in the Multi-AP Operation element.

The Coordinator field includes information indicating whether AP 1 is operating as the Coordinator AP. Note that, when the Group ID field and/or another field indicates that the Multi-AP operation is not in progress, the Coordinator field may indicate whether AP 1 is operable as the Coordinator AP. That is, the meaning of the Coordinator field may be changed depending on whether the Multi-AP operation is in progress.

The Coordinated AP list field includes a list of IDs (BSSIDs, BSS colors, MAC addresses, hash values of MAC addresses, and the like) of APs participating in a group of Multi-AP coordination indicated by the Group ID field.

The Connectivity bitmap field may include information indicating whether each AP indicated in the Coordinated AP list field is directly communicable with the Coordinator AP via a radio medium. Note that, a Coordinated AP that is not directly communicable with the Coordinator AP through a radio medium is expected to perform the Multi-AP coordination by communicating with the Coordinator AP through radio backhaul (Ethernet connection) and the like, each AP indicated in the Coordinated AP list field instead of the Connectivity bitmap field may include information indicating whether each AP communicates with the Coordinator AP through a wired medium (for example, a Wired Backhaul bitmap field) .

When AP 1 does not operate as the Coordinator AP (including unset up), the Coordinated AP list field and the Connectivity bitmap field may be omitted.

According to Example 2, the amount of information transmitted by the Beacon, which is transmitted periodically, can be reduced as compared to Example 1.

### <Example 3>

In Examples 1 and 2, an example in which the Coordinator AP is selected using the coordination bitmap in Multi-AP setup S501 has been described. In Example 3, an example will be described in which an AP indicates, to a neighboring AP, whether the AP is operable as the Coordinator AP (hereinafter referred to as "Coordinator AP availability information") in Multi-AP setup S501 and thus selects the Coordinator AP.

FIG. 11 illustrates still another exemplary operation sequence for determining whether to operate as the Coordinator AP through negotiation between AP 1 and AP 2 in Multi-AP setup S501.

In S1101, AP 2 may search for neighboring APs at the time of activation.

In S1102, AP 2 receives a Beacon transmitted by AP 1 periodically. AP 1 may cause Coordinator AP availability information (Capability information) to be included in the Beacon to be transmitted. AP 2 may transmit a Probe Request and receive a Probe Response transmitted by AP 1 in response to the Probe Request. In this case, the Probe Response may include the Coordinator AP availability information (Capability information).

In S1103, AP 2 that has received the Beacon or the Probe Response transmitted by AP 1 may determine availability of the coordinated communication based on the Coordinator AP availability information included in the Beacon or the Probe Response. For example, it may be determined that the coordinated communication is available in a case where "AP 1 is operable as the Coordinator AP, whereas AP 2 is not operable as the Coordinator AP" or "AP 1 is not operable as the Coordinator AP operation, whereas AP 2 is operable as the Coordinator AP. "

In S1104, AP 2 may transmit a Multi-AP Setup Request to AP 1. For example, AP 2 may transmit the Multi-AP Setup Request when determining that the coordinated communication is available. The Multi-AP Setup Request may use the format illustrated in FIG. 9, a format excluding the Coordinator AP ID information from FIG. 9, or a format including information indicating whether to operate as the Coordinator AP, instead of the Coordinator AP ID information.

In S1105, AP 1 may transmit a Multi-AP Setup Response to AP 2. The format of the Multi-AP Setup Response may be the same as the format of the Multi-AP Setup Request. Note that a Coordinate Type included in the Multi-AP Setup Response may be a coordination scheme in which both AP 1 and AP 2 are operable. The completion of an operation preparation for the coordinated communication as the Coordinator AP or the Coordinated AP may be indicated in the Multi-AP Setup Response. The completion of the operation preparation for the coordinated communication as the Coordinator AP or the Coordinated AP may be determined by transmission or reception of the Multi-AP Setup Response.

### <Variation>

In Examples 1, 2, and 3, an example in which the Coordinator AP is determined in Multi-AP setup S501 has been described, but, for example, after the Coordinator AP is determined in Multi-AP setup S501, an AP that indicates control information for the coordinated communication (hereinafter referred to as "AP-to-AP communication connection destination AP") may be determined. The Variation can be combined with any of Example 1, Example 2, and Example 3.

For example, in a situation where AP 1 is the Coordinator AP or AP 1 is the Coordinated AP participating in the Coordination Group in Example 1, and AP 2 is the Coordinated AP and can perform transmission and reception with a plurality of APs, AP 1 may indicate, to AP 2, which AP is optimal to be indicated when AP 2 perform transmission to AP 1. For example, AP 2 may indicate transmission/reception available AP information (information on a plurality of APs with which AP 2 can perform transmission and reception) to AP 1, and APs on the way may perform the same operation. When AP 1 receives the transmission/reception available AP information, AP 1 may specify an AP-to-AP communication connection destination AP (AP to which transmission is performed when final destination AP is AP 1) when AP 2 perform transmission to AP 1, based on at least one of the number of transfers from AP 2 and the reception quality at the time of transfer. In this case, AP 2 may indicate the transmission/reception available AP information to AP 1 in a Multi-AP Setup Request, and AP 1 may indicate the AP-to-AP communication connection destination AP to AP 2 in a Multi-AP Setup Response.

In a case where an AP other than AP 1 is the Coordinator AP, AP 1 may transfer the Multi-AP Setup Request and the Multi-AP Setup Response that are indicated between the Coordinator AP and AP 2.

In Example 1, in a situation where AP 2 is the Coordinator AP or AP 2 is the Coordinated AP participating in the Coordination Group, and AP 1 is the Coordinated AP and can perform transmission and reception of information with a plurality of APs, AP 1 may indicate, to AP 2, the transmission/reception available AP information in a Multi-AP Setup Response, and AP 2 may indicate, to AP 1, the AP-to-AP communication connection destination AP in a Multi-AP Action frame with the Category defined as a coordination AP specification.

Note that, an operation example has been described in which the transmission/reception available AP information is indicated in the Multi-AP Setup Request or the Multi-AP Setup Response, and the AP-to-AP communication connection destination AP is indicated in the Multi-AP Setup Response or the Multi-AP Action frame with the Category defined as the coordinated AP specification, but the transmission/reception available AP information and the AP-to-AP communication connection destination AP may be indicated in the Multi-AP Action frame with the Category defined as the coordinated AP specification or may be indicated in another frame.

The indication of the transmission/reception available AP information or the AP-to-AP communication connection destination AP may be performed using the AP indication format illustrated in FIG. 12.

In the AP indication format illustrated in FIG. 12, the AP ID field may be an ID of a transmission/reception available AP in the case of transmission/reception available AP information. The AP ID may be an ID of the AP-to-AP communication connection destination AP in the case of the AP-to-AP communication connection destination AP.

The RSSI field may indicate the reception quality of each transmission/reception available AP (for example, reception power or path loss of Beacon transmitted by each AP). The RSSI field may be used for selection of the optimal AP by the Coordinator AP. The response specifying the AP-to-AP communication connection destination need not include RSSI.

FIG. 12 illustrates an example in which the Type value is set to three (Type = 3) in the Multi-AP element, but a format is possible in which an AP ID and an RSSI are added to the Multi-AP Setup Request or Multi-AP Setup Response, for example. Further, in a case where the AP-to-AP communication connection destination AP is indicated, the format may include only one AP ID.

### <Example 4>

The Coordinator AP availability information on an AP in Example 3 may be specified by a higher layer.

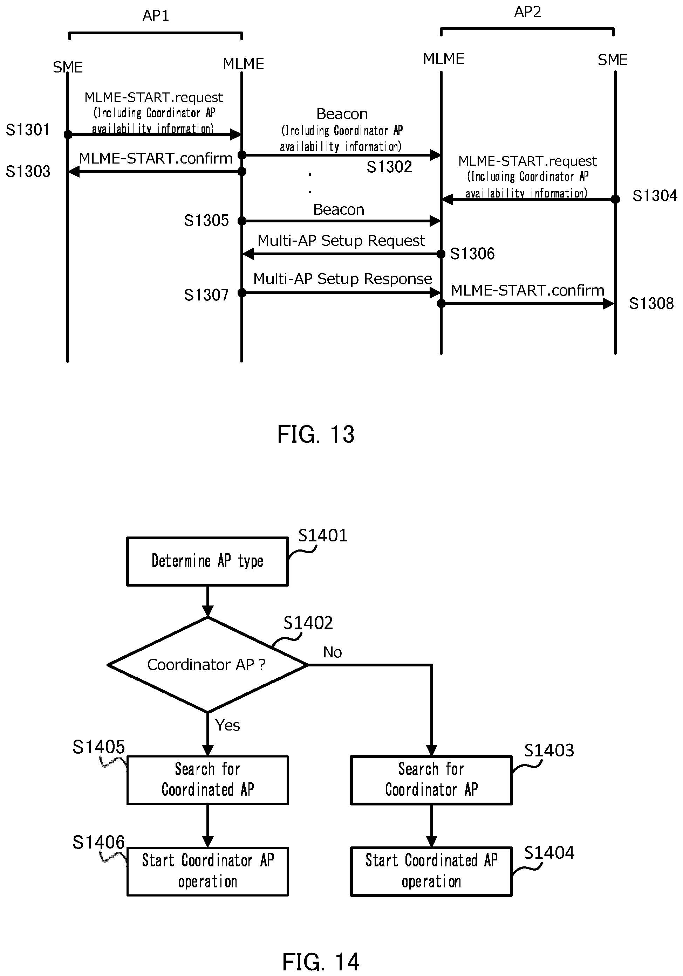

FIG. 13 illustrates an exemplary operation sequence in which AP 1 and AP 2 are activated in this order and the Coordinator AP is selected after AP 2 is activated in Multi-AP setup S501.

In S1301, at the time of activation of AP 1, a station management entity (SME), which is a higher layer, transmits an MLME-START.request primitive including a Multi-AP parameter (including Coordinator AP availability information) to a MAC sublayer management entity (MLME), which is a lower layer.

In S1302, MLME of AP 1 that has received the MLME-START.request may confirm whether to receive a Beacon transmitted by a neighboring AP. In the present operation example, since the Beacon transmitted by the neighboring AP is not received, periodic transmission of the Beacon (including Coordinator AP availability information) may be started. The transmission of the Beacon by AP 1 may be irregular, not periodic.

In S1303, an MLME-START.confirm primitive may be replied to SME of AP 1, along with the start of Beacon transmission.

In S1304, at the time of activation of AP 2, MLME of AP 2 receives the MLME-START.request primitive from SME in the same manner as in AP 1.

In S1305, the MLME of AP 2 may confirm whether to receives a Beacon transmitted by a neighboring AP. In the present operation example, the Beacon transmitted by AP 1 is received. AP 2 may transmit a Probe Request and receive a Probe Response transmitted by AP 1 in response to the Probe Request.

In S1306, MLME of AP 2 determines the availability of the coordinated communication based on the Coordinator AP availability information included in the MLME-START.request primitive and the Coordinator AP availability information included in the Beacon or the Probe Response transmitted by AP 1. For example, MLME of AP 2 may determine that the coordinated communication is possible in a case where "AP 1 is operable as the Coordinator AP, whereas AP 2 is not operable as the Coordinator AP" or "AP 1 is not operable as the Coordinator AP operation, whereas AP 2 is operable as the Coordinator AP." When determining that the coordinated communication is possible, AP 2 may transmit a Multi-AP Setup Request to AP 1.

In S1307, AP 1 may transmit a Multi-AP Setup Response to AP 2 when AP 1 receives the Multi-AP Setup Request.

In S1308, AP 2 that has received the Multi-AP Setup Response may cause MLME to reply SME with the MLME-STARTconfirm primitive. Note that, the MLME-START.confirm primitive may include information indicating a start of the coordinated communication operation.

Note that, SME has been described as the higher layer, but a higher layer other than SME is possible. For example, a hostapd program, firmware, an access point management program, IEEE 1905 standards entity, Terminal defined in Wi-Fi standards, or the like may be used.

In a case where AP 1 is the Coordinated AP under the control of another Coordinator AP, AP 1 may indicate that AP 1 is the Coordinated AP under the control of another Coordinator AP in the Beacon or the Probe Response. In this case, AP 1 may indicate, to AP 2, an ID of the Coordinator AP using the Beacon, the Probe Response, or the Multi-AP Setup Response.

The Coordinator AP may indicate that the Coordinated AP list has been updated in a case where another Coordinated AP is present. For example, when AP 1 is the Coordinator AP, the Coordinated AP list may be indicated in a Multi-AP Setup Response frame. When AP 2 is the Coordinator AP, the Coordinated AP list may be indicated in a Multi-AP Setup Request frame. Further, an ID of the Coordinated AP may be included in the Coordinated AP list.

In Example 4, an example in which the Coordinator AP availability information of an AP in Example 3 is indicated by the higher layer has been described, but, in the operation examples of Example 1, Example 2, and the Variation, the higher layer may indicate the coordination bitmap in the same manner. Information indicated from the higher layer may be used as the availability information on the Coordinator AP and the availability information on the Coordinated AP, based on which MLME may generate a coordination bitmap. Further, the information indicated from the higher layer may include an operable coordination scheme, and the operable coordination scheme to be indicated may be limited to a scheme related to a path of transmission data (for example, JT or dynamic AP selection).

### <Example 5>

FIG. 14 illustrates an exemplary flowchart for describing an operation example using backhaul communication in Multi-AP setup S501.

Using the backhaul communication makes it possible to configure Multi-AP even when a Beacon transmitted by another AP cannot be received. Accordingly, it is necessary to determine whether an AP is the Coordinator AP or the Coordinated AP even when the Beacon cannot be received.

In S1401, the AP type is determined. In the AP type determination, SME may determine the type of AP (Coordinator or Coordinated AP). For example, an AP may be configured as the Coordinator AP when the AP operates as a controller AP of Wi-Fi Easy Mesh, or the AP may be configured as the Coordinated AP when the AP operates as an agent AP of Wi-Fi Easy Mesh.

When the AP is determined to be the Coordinated AP in AP type determination S1401 (when S1402 is No), a backhaul-connectable Coordinator AP is discovered through Coordinator AP search in S1403, and the operation as the Coordinated AP may be started and a Coordination Group participation procedure may be performed in S1404. In this case, the Coordination Group participation procedure may be performed to the Coordinator AP through the backhaul communication. The term "backhaul-connectable" may refer that Internet Protocol (IP) communication is possible, or that two or more APs on the same segment (subnet) are able to perform the IP communication. The "Coordination Group participation procedure" may include at least one of an ID registration procedure, a Capability exchange procedure, and an authentication procedure.

When the AP is determined to be the Coordinator AP in AP type determination S1401 (when S1402 is Yes), a backhaul-connectable Coordinated AP is discovered through Coordinated AP search in S1405, and the operation as the Coordinator AP may be started and a Coordination Group may be generated in S1406. In this case, the Coordination Group participation procedure may be performed to the Coordinated AP through the backhaul communication.

The determination results of the Coordinator AP and the Coordinated AP in AP type determination S1401 and the Coordination Group information (such as ID of Coordination Group, list of Coordinated APs, and the like) may be included in an MLME-START.request, which is indicated from SME to MLME, for example.

The AP-to-AP communication illustrated in Example 1, Example 2, Example 3, the Variation, and Example 4 may be performed through backhaul communication. For example, the Coordinator AP may accept a Coordination Group participation request from the Coordinated AP through the backhaul communication after the start of the Coordinator AP operation, or the Coordinator AP may determine whether participation is possible and indicate a result to the Coordinated AP through the backhaul communication.

A backhaul transceiver that performs the backhaul communication may be provided, or information to be transmitted and received through the backhaul communication may be include in input data to be input to coordination controller 406 and output data to be output from coordination controller 406 (not illustrated).

The Coordinator AP may indicate update of the list of Coordinator APs to another Coordinated AP through the backhaul communication, and the Coordinated AP that receives the indication may indicate the list in which SME is updated to MLME. For example, the information may be included in a newly defined MLME-MULTIAP-RECONFIGURATION.request and thus indicated.

As above, an operation example of the Multi-AP setup through the backhaul communication has been described, but the Multi-AP setup through the AP-to-AP communication may be performed simultaneously.

For example, in the Coordinator AP search and the Coordinated AP search illustrated in FIG. 14, a Beacon reception from another AP or a Probe Request transmission to another AP may be performed, and then, the Multi-AP setup operation illustrated in Examples 1 to 4 may be performed in a case where the other APs are present, the Multi-AP setup through the backhaul communication may be performed for an AP that has transmitted the received Beacon, or the AP that performs the Multi-AP setup through the backhaul communication may be limited to an AP that received the Beacon.

### (Embodiment 2)

In an embodiment of the present invention, an operation of the coordinated communication (including interference measurement) is started based on states of an AP and an STA.

The configurations of the STA and the AP may be the same as the configurations described in Embodiment 1.

### <Example 6>

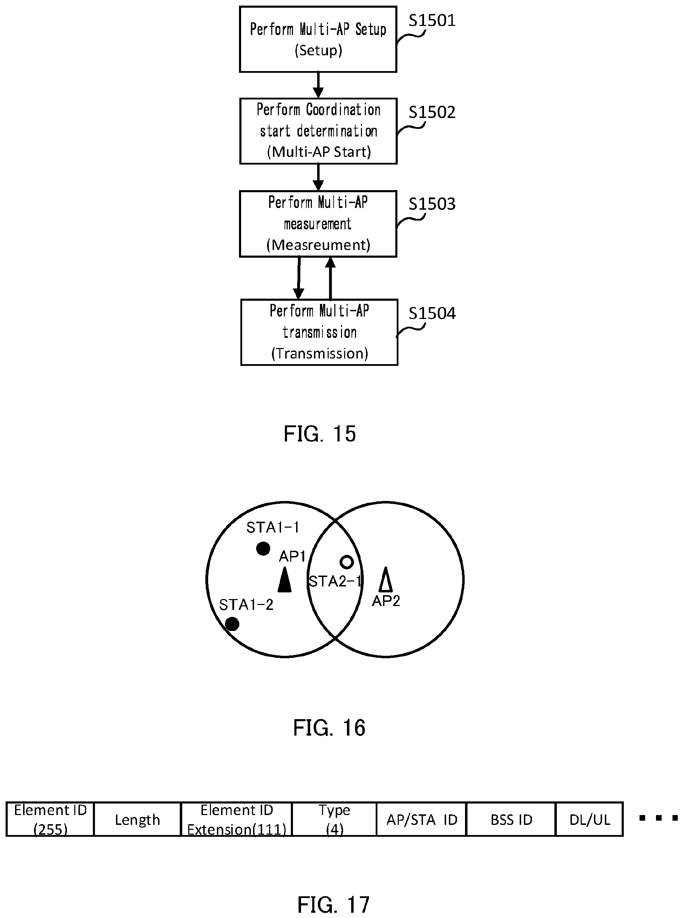

FIG. 15 illustrates overall steps different from those in FIG. 5. An exemplary case is illustrated where AP 2 is newly installed in a state where AP 1 is installed and transmits Beacons periodically. As illustrated in FIG. 15, each AP performs Multi-AP measurement S1503 and Multi-AP transmission S1504 after Multi-AP setup S1501 and coordination start determination S1502.

In FIG. 15, Multi-AP setup S1501, Multi-AP measurement S1503, and Multi-AP transmission S1504 may be the same operations as those in Embodiment 1. In coordination start determination S1502, it may be determined that coordinated communication is started in a case where transmission waiting occurs due to influence of interference by another AP or an STA. After coordination start determination S1502, Multi-AP measurement S1503 and Multi-AP transmission S1504 may be started. Note that, regarding the determination of whether the transmission waiting occurs, it is determined that the transmission waiting occurs when transmission data stored in a transmission buffer increases (transmission queue length increases) or when data transmission delay increases.

When determining to start the coordinated communication, the Coordinated AP may indicate a coordination start request to the Coordinator AP.

In a case where determining to start the coordinated communication, the STA may indicate the coordination start request to an AP with which the STA is associated (association AP), and the association AP may transfer the coordination start request to the Coordinator AP when the association AP is the Coordinated AP.

The ID, the ID of the detected AP (for example, BSS ID or BSS color), and UL/DL information on an interference packet may be added to the coordination start request. The target of the Multi-AP measurement may be limited based on the information included in the received coordination start request.

As described above, starting the coordinated communication in a case where the transmission waiting occurs, makes it possible to perform the interference measurement only when the coordinated communication is necessary, thereby reducing the power consumption of the STA. Further, the frequency utilization efficiency can be improved by performing transmission and transfer of interference data only when the coordinated communication is necessary.

FIG. 16 illustrates an arrangement example of APs and STAs. FIG. 16 illustrates an example of arrangement in which STA 1-1 and STA 1-2 are associated with AP 1, which is the Coordinator AP, and STA 2-1 is associated with AP 2, which is the Coordinated AP. In the arrangement of FIG. 16, an operation of a case where STA 2-1 cannot perform transmission due to influence of interference caused by a signal transmitted by AP 1 and transmission waiting occurs will be disclosed.

STA 2-1 detects the occurrence of the transmission waiting and indicates a coordination start request to AP 2, which is the association AP. The coordination start request may include information on a transmission source of an interference signal (AP 1 in this example). AP 2, which is the Coordinated AP, transfers the coordination start request of STA 2-1 to AP 1, which is the Coordinator AP.

AP 1 that has received the transferred coordination start request measures interference and instructs AP 2 to measure interference.

AP 1 and AP 2 may each instruct the STAs (for example, STA 1-1 and STA 1-2, and STA 2-1) with which they are associated to measure interference. Note that the target for measuring interference may be limited to some of the STAs. For example, the STA that is caused to measure interference may be limited to an STA with a small path loss (for example, STA 1-1) and STA 2-1 that has indicated the coordination start request in a case where the coordination scheme for operation is C-SR. AP 1 may specify the operation of the coordinated communication based on the result of the interference measurement. For example, AP 1 may specify C-SR that performs transmission from AP 1 to STA 1-1 and transmission from STA 2-1 to AP 2 simultaneously.

Note that the indication of the coordination start request may be limited to a case where there is influence of interference caused by signals transmitted by coordination APs (Coordinator AP and coordinated AP) and an STA associated with the coordination APs. In this case, the coordination AP list (including BSS IDs or BSS colors of coordination APs) may be indicated to the STAin advance. Thus, it is possible to prevent the indication of the coordination start request due to influence of interference caused by signals transmitted by an AP and an STA that are not targets of the coordinated communication.

Further, Multi-AP setup S1501 may be performed when a request to start the coordinated communication occurs. Thus, Multi-AP setup S1501 for an AP that performs the coordinated communication can be implemented. Further, it is possible to prevent an unnecessary Coordination Group building.

### [Format Example]

The coordination start request described in Example 6 may be defined as a type of Management frame. For example, in an Action frame, the coordination start request may be defined by a Multi-AP Action frame in which the Category is the coordination start request. For example, in a Multi-AP element, the Type value may be specified as 4 (Type = 4). An example of a coordination start request specified in the Multi-AP element is illustrated in FIG. 17.

In FIG. 17, an AP/STA ID field indicates an AP or STA affected by interference, and may be an Association ID (AID) in the case of the STA, or an unused AID (for example, 4094) in the case of the AP.

ABSS ID field may be a BSS ID or a BSS color, which is an interference source.

A DL/UL field is DL/UL information on an interference packet, and may be, for example, "0: DL, 1: UL, 2: DL and UL." Note that, in the case where the DL/UL is UL or DL and UL, a transmission source STA ID may be added to the format illustrated in FIG. 17.

### (Embodiment 3)

In an embodiment of the present invention, when an AP is placed in a position where direct transmission and reception between APs is not possible, an STA transfers information for communication between the APs (such as coordination control information), thereby enabling the transmission and reception between the APs. The configurations of the STA and the AP may be the same as the configurations described in Embodiment 1.

### <Example 7>

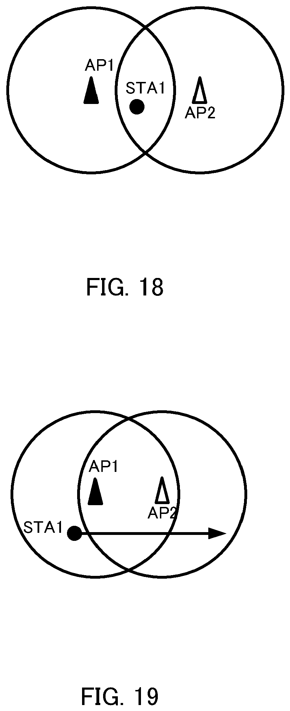

FIG. 18 illustrates another arrangement example of APs and an STA. FIG. 18 illustrates a case where AP 2 is newly placed in a position where AP 2 cannot perform transmission and reception directly with AP 1 but can perform transmission and reception directly with STA 1, in a situation where AP 1 and STA 1 associated with AP 1 are arranged. In the arrangement illustrated in FIG. 18, an example will be described in which STA 1 transfers information to be transmitted between AP 1 and AP 2, and thus, the Multi-AP coordination operation described in Embodiments 1 and 2 is performed.

When receiving a Beacon from newly activated AP 2, STA 1 may indicate that, to AP 1, AP 2 has been placed (hereinafter referred to as coordination candidate AP indication). Note that the presence or absence of the indication may be determined based on Capability information (for example, coordination operation availability flag) related to Multi-AP included in the Beacon of AP 2. Further, the indication may be made in a case where transmission waiting occurs in STA 1 due to, for example, the influence of interference by AP 2 or STA associated with AP 2, or the indication may be made in a case where AP 2 is not included in the coordinated AP list.

AP 1 that has received the coordination candidate AP indication transmits, to STA 1, a coordination start request (for example, Multi-AP Setup Request described in Embodiment 1) to AP 2, and STA 1 may transfer the received coordination start request to AP 2. Note that, in order for STA 1 to communicate with AP 2, STA 1 may also be associated with AP 2. When STA 1 is associated with AP 2, information (for example, flag indicating transfer or ID of AP 1) indicating that a purpose of the association is to transfer coordinated AP-to-AP control data may be included, or the coordination start request may be include in a signal to be transmitted at the time of association.

Hereinafter, the communication between AP 1 and AP 2 in the coordinated communication described in Embodiments 1 and 2 may be communication via STA 1.

As described above, even between APs that cannot perform transmission and reception directly with each other, the communication via an STA makes it possible to perform the coordinated operation.

### (Embodiment 4)

In a case where the coordination scheme applied to the Multi-AP coordinated communication described in Embodiments 1, 2, and 3 is the Dynamic AP selection, the operations may be performed as follows.

FIG. 19 illustrates still another arrangement example of APs and an STA. FIG. 19 illustrates an operation example in a case where AP 1 and AP 2, which are operable in the Dynamic AP selection as the coordination scheme, participate in the same Coordination Group, and STA 1 moves in the direction of AP 2 after being associated with AP 1.

For AP 1 and AP 2, dynamic AP selection has been selected as the coordination scheme, through Multi-AP setup S501 illustrated in Embodiments 1, 2, and 3.

STA 1 may be associated with AP 2 as a switching candidate for the dynamic AP selection. For example, STA 1 may perform association in a case where AP 2 is included in the coordination AP list and/or in a case where reception power of a signal (for example, Beacon) transmitted by AP 2 exceeds a certain threshold. Further, AP 1 may indicate a list of APs operable in the dynamic AP selection to STA 1 in advance, and STA 1 may perform the association in a case where AP 2 is included in the list of APs received by STA 1.

As described above, the dynamic AP selection can be executed by specifying the AP that is a target of the coordinated communication in the Multi-AP setup. Further, an unnecessary association can be prevented by a STA that is highly likely to perform the dynamic AP selection being associated with a switching destination AP.

Note that the association request indicated by STA 1 to AP 2 may include information indicating that AP 2 is a destination candidate for transition through the dynamic AP selection, or may include an ID of an AP with which STA 1 is currently associated (for example, AP 1) and the ID of STA 1 (for example, AID allocated by AP 1). Thus allows the switching destination AP to specify the switching source AP.

Further, the association response indicated by AP 2 to STA 1 may include availability information on the dynamic AP selection and/or rank information. With respect to the rank information, for example, a case where information on transmitted packets can be shared between AP 1 and AP 2 may be configured to rank 1 and a case where the information on transmitted packets cannot be shared between AP 1 and AP 2 may be configured to rank 2. STA 1 may change a parameter for the dynamic AP selection (for example, threshold of difference between AP 1 reception power and AP 2 reception power for determining switching operation start, or the number of forward and backward protections for performing switching), depending on the rank. For example, rank 1 may be a value for which switching is easily performed. This makes it possible to perform switching in accordance with the functions of the switching destination AP and the switching source AP.

Further, STA 1 may indicate the transmission/reception destination switching request to AP 1 (switching source AP) and AP 2 (switching destination AP).

Further, AP 1 may make the switching request. In this case, the switching request may be made based on the result of Multi-AP measurement S1503 (measurement of interference by AP 2 in STA 1).

Further, a BSS (virtual BSS) including AP 1 and AP 2 may be provided. In this case, STA 1 may be associated with the virtual BSS instead of being associated with AP 2.

The embodiments have been each described above with reference to the drawings, but the present disclosure is not limited to such examples. It is apparent that those skilled in the art can arrive at various modifications or variations at within the scope of the claims, and it is naturally understood that such modifications or variations are also within the technical scope of the present disclosure. In addition, any combination of component elements in the above-mentioned embodiment may be made without departure from the spirit of the present disclosure.

In the embodiment described above, the term such as "part" or "portion" or the term ending with a suffix such as "-er" "-or" or "-ar" may be replaced with another term, such as "circuit (circuitry)," "assembly," "device," "unit," or "module."

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

In addition, in recent years, in Internet of Things (IoT) technology, Cyber Physical Systems (CPS), which is a new concept of creating new added value by information collaboration between physical space and cyberspace, has been attracting attention. Also in the above embodiments, this CPS concept can be adopted.

That is, as a basic configuration of the CPS, for example, an edge server disposed in the physical space and a cloud server disposed in the cyberspace can be connected via a network, and processing can be performed in a distributed manner by processors mounted on both of the servers. Here, it is preferable that processed data generated in the edge server or the cloud server be generated on a standardized platform, and by using such a standardized platform, it is possible to improve efficiency in building a system including various sensor groups and/or IoT application software.
(1) An access point according to an exemplary embodiment of the present disclosure includes: a transceiver, which in operation, receives information on coordinated communication; and control circuitry, which, in operation, determines whether to operate as an access point that controls the coordinated communication.
(2) In the access point of (1) according to an exemplary embodiment of the present disclosure, the information on the coordinated communication received by the transceiver is information received from another access point, the transceiver transmits the information on the coordinated communication to the another access point, and the control circuitry determines whether to operate as the access point that controls the coordinated communication through negotiation with the another access point.
(3) In the access point of (2) according to an exemplary embodiment of the present disclosure, the information on the coordinated communication received from the another access point or the information on the coordinated communication transmitted to the another access point is a coordination bitmap.
(4) In the access point of (1) according to an exemplary embodiment of the present disclosure, the transceiver transmits, to another access point, whether the access point is operable as the access point that controls the coordinated communication.
(5) In the access point of (1) according to an exemplary embodiment of the present disclosure, the control circuitry specifies whether a higher layer operates as the access point that controls the coordinated communication.
(6) In the access point of (1) according to an exemplary embodiment of the present disclosure, the information on the coordinated communication received by the transceiver includes a coordination scheme and is information received from another access point, and the control circuitry determines a coordination scheme for the coordinated communication based on an operable coordination scheme.
(7) In the access point of (1) according to an exemplary embodiment of the present disclosure, the control circuitry determines to start the coordinated communication based on a result of measurement of interference by another access point or a terminal.
(8) In the access point of (1) according to an exemplary embodiment of the present disclosure, the transceiver receives, from a terminal, information on the coordinated communication transmitted by another access point.
(9) In the access point of (1) according to an exemplary embodiment of the present disclosure, the control circuitry identifies a switching source access point for Dynamic AP selection by receiving, from a terminal, an association including: information indicating that the terminal is a destination candidate for transition through the Dynamic AP selection; or an ID of an access point with which the terminal is currently associated and an ID of the terminal.
(10) A method for controlling coordinated communication according to an exemplary embodiment of the present disclosure includes: receiving, by an access point, information on the coordinated communication; and determining, by the access point, whether to operate as an access point that controls the coordinated communication.

The disclosure of Japanese Patent Application No. 2022-162392, filed on October 7, 2022, including the specification, drawings and abstract, is incorporated herein by reference in its entirety.

### Industrial Applicability

The present disclosure is useful for coordinated communication.

### Reference Signs List

301, 401 Transmission packet generator
302, 402 Control signal generator
303, 403 Radio transceiver
304, 404 Reception packet decoder
305, 405 Reception quality measurer
306, 407 Control circuitry
406 Coordination controller

## Claims

1. An access point, comprising:
a transceiver, which in operation, receives information on coordinated communication; and
control circuitry, which, in operation, determines whether to operate as an access point that controls the coordinated communication.

2. The access point according to claim 1, wherein:
the information on the coordinated communication received by the transceiver is information received from another access point,
the transceiver transmits the information on the coordinated communication to the another access point, and
the control circuitry determines whether to operate as the access point that controls the coordinated communication through negotiation with the another access point.

3. The access point according to claim 2, wherein the information on the coordinated communication received from the another access point or the information on the coordinated communication transmitted to the another access point is a coordination bitmap.

4. The access point according to claim 1, wherein the transceiver transmits, to another access point, information indicating whether the access point is operable as the access point that controls the coordinated communication.

5. The access point according to claim 1, wherein the control circuitry specifies whether a higher layer operates as the access point that controls the coordinated communication.

6. The access point according to claim 1, wherein:
the information on the coordinated communication received by the transceiver includes a coordination scheme and is information received from another access point, and
the control circuitry determines a coordination scheme for the coordinated communication based on an operable coordination scheme.

7. The access point according to claim 1, wherein the control circuitry determines to start the coordinated communication based on a result of measurement of interference by another access point or a terminal.

8. The access point according to claim 1, wherein the transceiver receives, from a terminal, information on the coordinated communication transmitted by another access point.

9. The access point according to claim 1, wherein the control circuitry identifies a switching source access point for Dynamic AP selection by receiving, from a terminal, an association including: information indicating a destination candidate for transition through the Dynamic AP selection; or an ID of an access point with which the terminal is currently associated and an ID of the terminal.

10. A method for controlling coordinated communication, the method comprising:
receiving, by an access point, information on the coordinated communication; and
determining, by the access point, whether to operate as an access point that controls the coordinated communication.
